# NEUE EUROPÄISCHE PATENTSCHRIFT

(11) **EP 2 729 393 B2**
(45) Veröffentlichungstag und Bekanntmachung des Hinweises auf die Entscheidung über den Einspruch: **12.02.2020**
(45) Hinweis auf die Patenterteilung: 03.02.2016
(21) Anmeldenummer: 12732813.6
(22) Anmeldetag: 22.06.2012
(51) Int. Cl.: B65G 37/02, B65G 47/80, B62D 65/18, F26B 15/14

(54) **FÖRDERANLAGE FÜR DAS BEHANDELN VON WERKSTÜCKEN**
SYSTEM FOR TREATING WORKPIECES
INSTALLATION POUR LE TRAITEMENT DE PIÈCES

(30) Priorität: 05.07.2011 DE 102011078707
(43) Veröffentlichungstag der Anmeldung: 14.05.2014
(73) Patentinhaber: Dürr Systems AG, 74321 Bietigheim-Bissingen (DE)
(72) Erfinder: HEINSOHN, Klaus, 71263 Weil der Stadt (DE); PHILIPP, Lutz, 71665 Vaihingen/Enz (DE)
(74) Vertreter: Gauss, Nikolai
(86) Internationale Anmeldenummer: PCT/EP2012/062079
(87) Internationale Veröffentlichungsnummer: WO 2013/004520

(56) Entgegenhaltungen:
- EP-A1- 1 473 258
- EP-B1- 0 641 984
- WO-A1-03/043915
- DE-A1- 4 329 384
- JP-A- S6 274 536
- US-A- 2 986 261
- US-A- 5 411 130
- US-A1- 2009 067 962

## Beschreibung

Die Erfindung betrifft eine Anlage für das Behandeln der Oberfläche von Werkstücken, insbesondere für das Trocknen von Werkstücken, z. B. von Kraftfahrzeugkarossen, mit einer Fördervorrichtung für das Transportieren von aufeinanderfolgend angeordneten Werkstücken, insbesondere Kraftfahrzeugkarossen, mit einer Förderstrecke, auf der die Gegenstände unter Änderung der Bewegungsrichtung mit einem ortsfesten Antriebssystem bewegt werden können, wobei die Förderstrecke wenigstens einen Umsetzabschnitt aufweist, dem die Werkstücke mit einer ersten Bewegungsrichtung zugeführt, in dem die Werkstücke um eine Drehachse gedreht und aus dem die Werkstücke mit einer von der ersten Bewegungsrichtung verschiedenen zweiten Bewegungsrichtung abtransportiert werden.

Eine Anlage der eingangs genannten Art mit einer Fördervorrichtung ist aus der EP 1 473 258 A1 bekannt. Solche Fördervorrichtungen werden in industhellen Produktionsanlagen, insbesondere in Beschichtungs- oder Reinigungsanlagen eingesetzt. Mit ihnen können Werkstückträger mit Produktionsgegenständen, z. B. Körbe oder auch Rahmen bzw. Gerüste, insbesondere auch als "Skids" bezeichnete Transportschlitten, an denen die Produktionsgegenstände aufgenommen sind, durch eine Anlage bewegt werden. Die Werkstückträger werden hier auf einer Vielzahl von teilweise angetriebenen, teilweise nicht angetriebenen Rollen bewegt.

Aufgabe der Erfindung ist es, eine Anlage mit einer Fördervorrichtung bereitzustellen, mit der Werkstücke, die auf einer Förderstrecke aufeinanderfolgend angeordnet sind, mit hohem Durchsatz durch eine auf engem Raum angeordnete Anlage transportiert werden können.

Diese Aufgabe wird durch eine Anlage mit den Merkmalen des Anspruchs 1 gelöst.

Die Förderstrecke in einer erfindungsgemäßen Anlage enthält wenigstens einen Umsetzabschnitt, dem die Werkstücke mit einer ersten Bewegungsrichtung zugeführt, in dem die Werkstücke um eine ortsfeste Drehachse gedreht und aus dem die Werkstücke mit einer von der ersten Bewegungsrichtung verschiedenen zweiten Bewegungsrichtung abtransportiert werden.

Die Fördervorrichtung hat eine Förderstrecke mit einem Umsetzabschnitt, dem ein Beschleunigungsabschnitt vorgelagert und ein Abbremsabschnitt nachgelagert ist.

In dem Beschleunigungsabschnitt werden die Werkstücke mit einer Zuführeinheit von einer ersten Transportgeschwindigkeit v_{T1} auf eine gegenüber v_{T1} höhere zweite Transportgeschwindigkeit v_{T2} beschleunigt. Die beschleunigten Werkstücke werden dem Umsetzabschnitt aus dem Beschleunigungsabschnitt dann mit der ersten Bewegungsrichtung zugeführt. Sie werden in dem Umsetzabschnitt um die Drehachse gedreht und dann mit einer von der ersten Bewegungsrichtung verschiedenen zweiten Bewegungsrichtung an den Abbremsabschnitt übergeben. Die an den Abbremsabschnitt übergebenen Werkstücke werden dann mit einer Übernahmeeinheit von einer dritten Transportgeschwindigkeit v_{T3} auf eine gegenüber v_{T3} niedrigere vierte Transportgeschwindigkeit v_{T4} abgebremst.

In einer bevorzugten Variante entsprechen sich v_{T1} und v_{T4} ebenso wie die Differenzen zwischen v_{T1} und v_{T2} einerseits sowie v_{T3} und v_{T4} andererseits.

Das Beschleunigen der Werkstücke vor einem Umsetzen und das Abbremsen der Werkstücke nach dem Umsetzen ermöglicht, dass die Bewegungsrichtung der Werkstücke in einer ausreichenden Zeitspanne und auf engem Raum geändert werden kann. Dabei wird die für das Umsetzen der Werkstücke zur Verfügung stehende Zeitspanne insbesondere durch die Höhe der Beschleunigung(en) und die Länge des Beschleunigungsabschnitts und ggf. des Abbremsabschnitts bestimmt.

Die Fördervorrichtung enthält bevorzugt Transportabschnitte, in denen die Werkstückträger bzw. die Produktionsgegenstände mit im Wesentlichen konstanter Geschwindigkeit bewegt werden. Damit lässt sich erreichen, dass die Prozesszeiten für das Behandeln von Werkstückoberflächen in Beschichtungsanlagen mit geringem Aufwand definiert eingehalten werden können.

Erfindungsgemäß ist ein solcher Transportabschnitt dem Beschleunigungsabschnitt vorgelagert oder dem Abbremsabschnitt nachgelagert.

Es ist möglich, die Werkstücke in dem Beschleunigungsabschnitt mit einer Beschleunigungskraft zu beaufschlagen, die sich bei dem Verlagern der Werkstücke in dem Beschleunigungsabschnitt verändert. D.h., die Beschleunigung der Werkstücke kann z.B. mit einer fortschreitenden Verlagerung in dem Beschleunigungsabschnitt allmählich zu- und dann wieder abnehmen. Entsprechend können die Werkstücke in dem Abbremsabschnitt mit einer sich ändernden Beschleunigung abgebremst werden.

Im Rahmen der Erfindung kann insbesondere vorgesehen werden, Werkstückträger oder Produktionsgegenstände entlang von zwei im Wesentlichen parallel angeordneten Strängen zu fördern, während die Produktionsgegenstände einem Umgestaltungsvorgang unterworfen werden. Erfindungsgemäß betrifft ein solcher Umgestaltungsvorgang eine Beschichtung eines Produktionsgegenstandes (z. B. mit einem Lack), einen Bestrahlungsvorgang, einen Aufheiz- bzw. Abkühlungsvorgang und/oder einen Vorgang plastischer bzw. zerspanender Umformung.

Zur Übertragung von Bewegungskräften auf Werkstückträger oder Produktionsgegenstände sind (Linear-)Antriebseinheiten vorgesehen, die angetriebene Zugelemente wie Ketten oder Seile umfassen, welche mit Werkstückträger oder Produktionsgegenständen mechanisch gekoppelt sind und sich somit entlang einer gewissen Wegstrecke translatorisch mit den Werkstückträgern oder Produktionsgegenständen mitbewegen. Alternativ sind ortsfest montierte Rollen vorgesehen, die über eine Abrollbewegung die Werkstückträger oder Produktionsgegenstände mit einem Antriebsmoment versehen. Die Fördervorrichtung in einer erfindungsgemäßen Anlage umfasst darüber hinaus auch mehrere weitere Förderabschnitte (sogenannte Abzugseinheiten), auf denen die Werkstückträger oder Produktionsgegenstände beschleunigt oder abgebremst werden. Insbesondere dienen diese Förderabschnitte als Entkopplungsglieder zwischen wenigstens einem ersten Förderabschnitt und einem dritten Förderabschnitt.

Diese weiteren Förderabschnitte lassen sich in eine Gruppe von beschleunigenden Abzugseinheiten und in eine Gruppe von bremsenden Abzugseinheiten unterteilen, wobei die beschleunigenden Abzugseinheiten jeweils wenigstens eine beschleunigende Linearantriebseinrichtung aufweisen und wobei die bremsenden Abzugseinheiten jeweils wenigstens eine Bremseinrichtung enthalten. Auch diese Bremseinrichtung kann als eine Linearantriebseinrichtung ausgebildet bzw. in eine Linearantriebseinrichtung integriert sein.

Die Fördervorrichtung in einer erfindungsgemäßen Anlage hat einen Förderabschnitt in Form eines Umsetzabschnitts. Der Umsetzabschnitt ist insbesondere dadurch gekennzeichnet, dass sich ein in dem Umsetzabschnitt angeordnetes Werkstück oder eine entsprechende Werkstückaufnahme um einen nahezu beliebigen Winkel α (0° < α < 360°) um eine Vertikalachse drehen oder schwenken lässt. Das ermöglicht es, einen Werkstückträger oder Produktionsgegenstand auf einer Kreisbahn um eine Vertikalachse zu verlagern.

In dem Umsetzabschnitt gibt es eine als Linearbewegungseinrichtung ausgebildete Fördereinrichtung. Dabei befördern die beschleunigenden Abzugseinheiten jeweils einen oder mehrere Werkstückträger oder Produktionsgegenstände auf eine gegenüber der Transportgeschwindigkeit eines ersten Förderabschnitts erhöhte Geschwindigkeit, um für diese(n) einen oder mehrere Werkstückträger oder Produktionsgegenstände einen räumlichen und zeitlichen "Vorsprung" gegenüber nachfolgenden Werkstückträgern oder Produktionsgegenständen zu erzielen.

Der genannte Vorsprung wird erfindungsgemäß so gewählt, dass ein Werkstück in dem Umsetzabschnitt in dieser Zeit wunschgemäß gedreht oder verschwenkt werden kann. Die solchermaßen beschleunigten Werkstückträger oder Produktionsgegenstände werden von der dritten Linearbewegungseinrichtung zunächst weitgehend vollständig auf den Umsetzabschnitt übernommen und dort auf eine Geschwindigkeit abgebremst, die kleiner ist als die Transportgeschwindigkeit des ersten Förderabschnitts. In einer bevorzugten Variante werden die Werkstückträger oder der Produktionsgegenstand zeitweise auf eine relativ zum Umsetzabschnitt ruhende Position arretiert. Nach weitgehendem Abschluss der Dreh-/Schwenkbewegung des Umsetzabschnitts werden Werkstückträger oder Produktionsgegenstand mit Hilfe der dritten Linearbewegungseinrichtung wiederum auf eine Geschwindigkeit beschleunigt, die vorzugsweise größer ist als die Transportgeschwindigkeit des ersten Förderabschnitts, und anschließend an eine bremsende Abzugseinheit übergeben.

Erfindungsgemäß sind die ersten, zweiten und dritten Linearbewegungseinrichtungen jeweils als voneinander unabhängig ansteuerbare Rollen- oder Zahnradbahnen, bzw. als Seil-, Gurt- oder Kettenförderer ausgestaltet. Besonders bevorzugt ist die erste Linearbewegungseinrichtung als Kettenförderer gestaltet, während die zweite Linearbewegungseinrichtung und die dritte Linearbewegungseinrichtung als Rollenbahnen ausgeführt sind, bevorzugt als Rollenbahnen mit jeweils mehreren, über einen gemeinsamen Antrieb bewegten und um eine Horizontalachse drehbar gelagerten Rollen.

Mit der Fördervorrichtung der erfindungsgemäßen Anlage lassen sich insbesondere Werkstückträger bzw. Transporteinheiten (Skids) bewegen, die in industriellen Produktionsanlagen auf herkömmlichen Fördervorrichtungen verbreitet im Einsatz sind. Eine Fördervorrichtung in einer erfindungsgemäßen Anlage kann aber auch so ausgebildet sein, dass sich damit nahezu beliebige Waren, Werkstücke oder Gegenstände transportieren lassen, ohne dass diese an bzw. auf einer Transporteinheit angeordnet sein müssten.

Indem der Umsetzabschnitt die Gegenstände von einer Zuführeinheit (beschleunigende Abzugseinheit) erhält, in der die Gegenstände relativ zur Geschwindigkeit des ersten Förderabschnitts beschleunigt wurden, ist ein Zeitraum zur Verfügung gestellt, in dem der Umsetzabschnitt bewegt und für einen nachfolgenden Gegenstand vorbereitet werden kann. Somit ist ein kontinuierliches Transportieren der Gegenstände in der ersten Fördervorrichtung mit konstanter Geschwindigkeit möglich.

Der Umsetzabschnitt weist einen um die ortsfeste Drehachse drehbare Drehvorrichtung mit einer Linearbewegungseinrichtung für das Einholen von Gegenständen auf den Drehteller in der ersten Bewegungsrichtung und das Freigeben von Gegenständen in der zweiten Bewegungsrichtung auf. Diese Maßnahme ermöglicht das Transportieren von Gegenständen mit horizontalen Kehren, die auf sehr engem Raum angeordnet sind. Insbesondere ermöglicht diese Maßnahme ohne den Einsatz von Kettenzügen das Ändern der Bewegungsrichtung von Gegenständen, die durch eine Anlage bewegt werden. Diese ist insbesondere in Anlagen mit einer chemischen, aggressiven Prozessatmosphäre und/oder in Anlagen von Vorteil, in denen Werkstücke durch eine Heißgasatmosphäre bewegt werden. Mit der Fördervorrichtung in einer erfindungsgemäßen Anlage können hier nämlich Werkstücke, insbesondere Fahrzeugkarossen bewegt werden, ohne dass Schmutzpartikel und/oder Kondensat in die Heißgas- bzw. Prozessatmosphäre eingetragen werden, was sich bei Fördervorrichtungen mit einer Förderkette nicht oder nur schwer vermeiden lässt.

Die Fördervorrichtung kann eine Linearbewegungseinrichtung für das Bewegen der Gegenstände auf der Drehvorrichtung aufweisen, die mit einem zu der ortsfesten Drehachse räumlich versetzt angeordneten Verlagerungsweg ausgebildet ist. Alternativ hierzu ist es jedoch auch möglich, die Linearbewegungseinrichtung für das Bewegen der Gegenstände auf der Drehvorrichtung mit zwei zueinander und zu der ortsfesten Drehachse räumlich versetzt angeordneten Verlagerungswegen auszuführen.

Der Antrieb für die Linearbewegungseinrichtung ist oberhalb oder unterhalb der Drehvorrichtung angeordnet. Diese Maßnahme gewährleistet die platzsparende Anordnung des Antriebs mit einem großen Abstand von der Förderstrecke der Fördervorrichtung. Darüber hinaus lässt sich mit dieser Maßnahme erreichen, dass der Antrieb außerhalb einer heißen und u.U auch aggressiven Prozessatmosphäre betreiben werden kann, durch welche die Werkstücke mit der Fördervorrichtung bewegt werden.

Die Fördervorrichtung in einer erfindungsgemäßen Anlage kann eine Förderstrecke mit wenigstens einem mäanderförmigen Abschnitt und/oder einem W-förmig, L-förmig, S-förmig oder auch U-förmig geführten Abschnitt haben.

Die Fördervorrichtung eignet sich insbesondere für den Einsatz in einer Anlage für das Behandeln der Oberflächen von Werkstücken, z. B. in einem Trocknertunnel für das Trocknen von Werkstücken, etwa für das Trocknen von Kraftfahrzeugkarossen. Eine Idee der Erfindung ist hier, die Fördervorrichtung für das Transportieren von Gegenständen mit Richtungsänderung in einem Heißgasatmosphärenbereich einzusetzen. Dort ist die Temperatur gegenüber der Umgebung um 20 °C bis 100 °C oder auch mehr erhöht.

Indem die Linearbewegungseinrichtung der Drehvorrichtung in dem Heißgasatmosphärenbereich des Trocknertunnels und der Antrieb außerhalb des Heißgasatmosphärenbereichs des Trocknertunnels angeordnet ist, muss der Antrieb nicht für den Betrieb in einer Heißgasatmosphäre ausgelegt werden.

Der Antrieb der Linearbewegungseinrichtung ist dabei mittels eines Getriebes gekoppelt, das ein von außerhalb des Heißgasatmoshärenbereichs in den Heißgasatmosphärenbereich ragendes Getriebeelement enthält. Das Getriebeelement kann z. B. eine Welle, etwa eine Königswelle oder eine umlaufende Kette sein. Dieses Getriebeelement hat wenigstens einen sich von außerhalb des Heißgasatmosphärenbereichs in den Heißgasatmosphörenbereich hinein erstreckenden Abschnitt aus einem Material, das eine niedrigere Wärmeleitfähigkeit aufweist als 10 W/(m°K), insbesondere niedriger als 1 W/(m°K), z.B. aus Keramik oder aus Kunststoff.

Eine für den Einsatz in einer erfindungsgemäßen Anlage geeignete Keramik mit der geforderten geringen Wärmeleitfähigkeit kann z. B. Silikat-Rohstoffe wie Tonminerale und Kaoline enthalten und/oder aus oxidischen Rohstoffen wie Aluminiumoxid und Berylliumoxid, oder aus nichtoxidischen Rohstoffen wie Siliciumcarbid, Bornitrid oder Borcarbid aufgebaut sein.

Als Kunststoffe, deren Wärmeleitfähigkeit und Festigkeitswerte günstig sind und die sich deshalb für den Einsatz in einer erfindungsgemäßen Anlage eignen, werden insbesondere aus der Gruppe der Polyethylenterephthalate (PET), Polyurethane (PUR), Polyamide (PA), Polyimide (PI), Polytetrafluorethylene (PTFE), Epoxidharze (EP) oder Polymethylmetacrylate (PMMA) gewählt.

Durch eine Wärmeisolierung des Getriebes lässt sich erreichen, dass in den Trocknertunneln eine verminderte Menge an Kondensat abgeschieden wird.

Im Folgenden wird die Erfindung anhand der in der Zeichnung in schematischer Weise dargestellten Ausführungsbeispiele näher erläutert.

Es zeigen:
- Fig. 1: eine Beschichtungsanlage mit einem Heißgasatmosphärenbereich für das Trocknen und einer Fördervorrichtung für das Transportieren von Kraftfahrzeugkarossen;
- Fig. 2: verschiedene Geschwindigkeitsverläufe für das Bewegen von Kraftfahrzeugkarossen mit der Fördervorrichtung;
- Fig. 3: einen Ausschnitt der Fördervorrichtung in einer Draufsicht;
- Fig. 4: den Ausschnitt der Fördervorrichtung in einer Seitenansicht;
- Fig. 5a: eine Anlage für das Trocknen von Kraftfahrzeugkarossen in einem Heißgasatmosphärenbereich mit einer Fördervorrichtung in einer Draufsicht;
- Fig. 5b: die Anlage zum Trocknen von Kraftfahrzeugkarossen als abgewickelter Längsschnitt;
- Fig. 6: einen Trocknungsabschnitt in einer Beschichtungsanlage; und
- Fig. 7: einen weiteren Trocknungsabschnitt in einer Beschichtungsanlage.

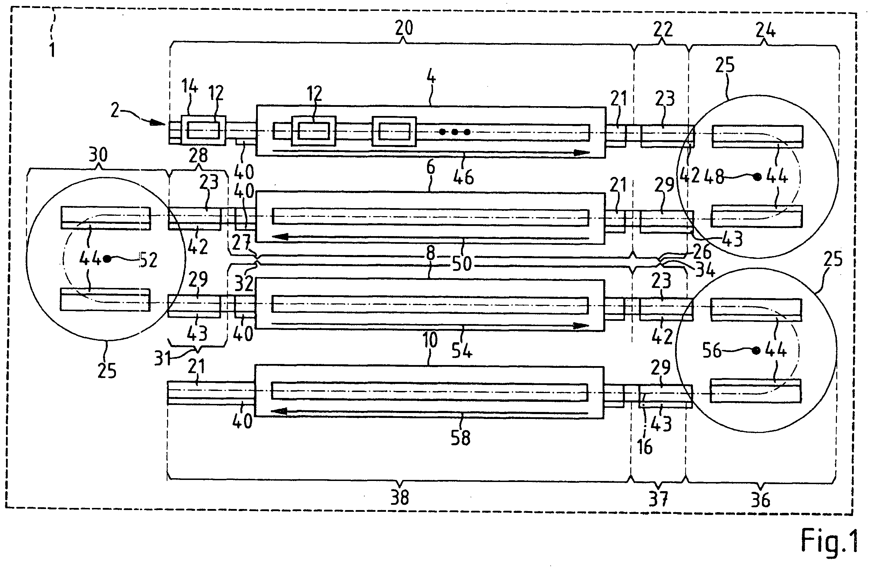

Eine Beschichtungsanlage 1 in Fig. 1 ist erfindungsgemäß als eine Anlage für das Behandeln der Oberfläche von Werkstücken in Form von Kraftfahrzeugkarossen 12 ausgebildet. Die Beschichtungsanlage 1 hat Behandlungsabschnitte 4, 6, 8 und 10. In der Beschichtungsanlage 1 gibt es für die Kraftfahrzeugkarossen 12 eine Fördervorrichtung 2. In der Fördervorrichtung 2 sind die Kraftfahrzeugkarossen 12 jeweils auf einem Skid 14 (Transportschlitten für Werkstücke) angeordnet. In den Behandlungsabschnitten 4, 6 werden die Kraftfahrzeugkarossen 12 mit Lack beschichtet, der unter Einsatz von Lackierrobotern auf die Kraftfahrzeugkarossen 12 aufgetragen wird. In den Behandlungsabschnitten 8, 10 werden die Kraftfahrzeugkarossen 12 zum Trocknen durch eine Heißgasatmosphäre transportiert. In modifizierten Ausführungsbeispielen werden Teile von Schiffen, Flugzeugen und/oder Bahnen transportiert und behandelt. In weiteren modifizierten Ausführungsbeispielen werden Teile von Abgasreinigungseinrichtungen oder Windenergie-Konversionsanlagen transportiert und behandelt. Dabei eignet sich eine erfindungsgemäße Anlage insbesondere auch für die Handhabung von sperrigen Produkten mit einer Abmessung von mehr als 3 m.

Die Fördervorrichtung 2 hat eine Förderstrecke 16. Mit der Fördervorrichtung 2 können die Kraftfahrzeugkarossen 12 auf einem Skid 14 entlang der Förderstrecke 16 durch die Beschichtungsanlage 1 bewegt werden. Die Förderstrecke 16 der Fördervorrichtung 2 ist in der Beschichtungsanlage 1 mit einer W-Form verlegt.

Die Förderstrecke 16 weist mehrere aufeinanderfolgende Förderabschnitte 20, 22, 24, 26, 27, 28, 30, 31, 32, 34, 36, 37, 38 auf. Die Förderstrecke 16 enthält einen ersten Förderabschnitt 20, der ein Transportabschnitt ist. Hier werden die Skids 14 mit den Kraftfahrzeugkarossen 12 mit einer im Wesentlichen konstanten Durchschnittsgeschwindigkeit entsprechend einer im Wesentlichen einheitlichen ersten Transportgeschwindigkeit v_{T1} bewegt.

In zweiten Förderabschnitten 22, 28, 34 der Förderstrecke 16 werden Skids 14 mit Kraftfahrzeugkarossen 12 von einer ersten Transportgeschwindigkeit v_{T1} auf eine zweite Geschwindigkeit v_{T2} beschleunigt, wobei bevorzugt v_{T2} > v_{T1} gewählt ist. Die zweiten Förderabschnitte 22, 28, 34 sind deshalb Beschleunigungsabschnitte. Darüber hinaus umfasst die Förderstrecke 16 dritte Förderabschnitte 24, 30 und 36. Die dritten Förderabschnitte 24, 30 und 36 sind Umsetzabschnitte. In einem als Umsetzabschnitt ausgebildeten Förderabschnitt 24, 30, 36 werden Skids 14 mit Kraftfahrzeugkarossen 12 um eine Drehachse 48, 52, 56 gedreht. In vierten Förderabschnitten 26, 31, 37 werden Skids 14 mit Kraftfahrzeugkarossen 12 von einer dritten Transportgeschwindigkeit v_{T3} auf eine vierte Geschwindigkeit v_{T4} abgebremst, wobei bevorzugt v_{T4} < v_{T3} gewählt ist und wobei die vierte Geschwindigkeit v_{T4} bevorzugt größer oder gleich der ersten Transportgeschwindkeit v_{T1} gewählt ist. Diese vierten Förderabschnitte sind Abbremsabschnitte. An den vierten Förderabschnitt 26 ist ein fünfter Förderabschnitt 27 angeschlossen, der wiederum ein Transportabschnitt ist, in dem die Skids 14 mit den Kraftfahrzeugkarossen 12 mit einer im Wesentlichen konstanten Durchschnittsgeschwindigkeit entsprechend einer einheitlichen vierten Transportgeschwindigkeit v_{T4} bewegt werden.

Die Förderstrecke 16 ist mit weiteren Förderabschnitten 32, 38 ausgebildet, die ebenfalls Transportabschnitte sind, in denen Skids 14 mit Kraftfahrzeugkarossen 12 mit einer im Wesentlichen konstanten Durchschnittsgeschwindigkeit bewegt werden.

In den Förderabschnitten 20, 22, 24, 26, 27, 28, 30, 31, 32, 34, 36, 37, 38 gibt es jeweils eine Skid-Fördereinrichtung 21, 23, 25, 29 mit einem Antriebssystem 40, 42, 43, 44. Das Skid-Antriebssystem 40 in den ersten Förderabschnitten 20, 27, 32, 38 ist als Zweistrang-Fördereinrichtung ausgebildet. In den zweiten Förderabschnitten 22, 28, 34 weist die Skid-Fördereinrichtung 23 bevorzugt ein Skid-Antriebssystem 42, 43 mit ortsfesten Lager- und Antriebsrollen auf, auf denen ein Skid 14 abrollen kann. Die Skid-Fördereinrichtungen 23 sind jeweils als Abzugs-Rollenbahnen ausgeführt. Dort wird ein Skid 14 mit Hilfe von ortsfest gelagerten, angetriebenen Rollen seitens der Skid-Fördereinrichtungen 23 insbesondere beschleunigt und optional abgebremst. In einem modifizierten Ausführungsbeispiel ist wenigstens eine Skid-Fördereinrichtung 23 als kurzer Kettenförderer ausgestaltet.

In den als Umsetzabschnitt ausgebildeten Förderabschnitten 24, 30, 36 ist eine Skid-Fördereinrichtung 25 angeordnet, die eine Drehvorrichtung mit einem Skid-Antriebssystem 44 enthält. Das Skid-Antriebssystem 44 einer Skid-Fördereinrichtung 25 umfasst insbesondere zwei mit einem Abstand parallel zueinander positionierte Linearbewegungseinrichtungen, die auf einem sogenannten Drehteller montiert sind. Der Abstand der Linearbewegungseinrichtungen entspricht dem doppelten Kurvenradius der Förderstrecke im Bereich des Umsetzabschnitts 24.

In dem Förderabschnitt 20 werden Skids 14 mit darauf angeordneten Kraftfahrzeugkarossen 12 mit der ersten Geschwindigkeit v_{T1} transportiert. Aus dem Förderabschnitt 20 gelangen die Skids 14 in den Förderabschnitt 22. Mit der Abzugs-Rollenbahn 23 im zweiten Förderabschnitt 22 wird ein in den Förderabschnitt 22 mit der ersten Geschwindigkeit v_{T1} zugeführter Skid 14 auf die zweite Geschwindigkeit v_{T2} beschleunigt. Die Abzugs-Rollenbahn 23 in dem Förderabschnitt 22 wirkt als Zuführeinheit für den Förderabschnitt 24. Aus dem zweiten Förderabschnitt 22 gelangt ein Skid 14 mit der zweiten Geschwindigkeit v_{T2} in den Förderabschnitt 24. In dem Förderabschnitt 24 wird der Skid 14 mit dem Skid-Antriebssystem 44 der Skid-Fördereinrichtung 25 von der Geschwindigkeit v_{T2} in eine Ruheposition abgebremst. Er wird dort auf einem Drehteller um eine Drehachse 48 gedreht. Nach einer Drehung des Drehtellers um 180° wird der Skid 14 mit dem Skid-Antriebssystem 44 auf die Geschwindigkeit v_{T3} beschleunigt und in dem Förderabschnitt 24 mit einer von der ersten Bewegungsrichtung 46 verschiedenen zweiten Bewegungsrichtung 50 zu dem vierten Förderabschnitt 26 verlagert. In dem vierten Förderabschnitt 26 wird dann ein Skid 14 mit einer darauf angeordneten Kraftfahrzeugkarosse 12 mit dem Skid-Antriebssystem 43 der Skid-Fördereinrichtung 29 von der dritten Geschwindigkeit v_{T3} auf die vierte Geschwindigkeit v_{T4} abgebremst. Die Skid-Fördereinrichtung weist hierzu mit wenigstens einer Bremseinrichtung versehene ortsfest montierte Rollen auf. Die Skid-Fördereinrichtung 29 wirkt dabei als eine Übernahmeeinheit, welche die Skids 14 mit Kraftfahrzeugkarossen 12 aus dem Förderabschnitt 24 übernimmt und abbremst. Der Förderabschnitt 26 übergibt den Skid 14 mit der Geschwindigkeit v_{T4} an den nächsten Förderabschnitt 27. Ab diesem Förderabschnitt 27 wiederholt sich in einem bevorzugten Ausführungsbeispiel der vorstehend beschriebene Aufbau in beliebiger Häufigkeit, und es wiederholen sich die vorangegangenen Ablaufmechanismen (Verfahrensschritte).

In dem Ausführungsbeispiel nach Fig. 1 gelangt ein Skid 14 mit einer Kraftfahrzeugkarosse von dem Förderabschnitt 27 zu dem Förderabschnitt 28 mit einer Abzugs-Rollenbahn 23. Dort beschleunigt die Abzugs-Rollenbahn 23 wie in dem Förderabschnitt 22 den Skid 14 und bewegt diesen in den Förderabschnitt 30. Wie in dem Förderabschnitt 24 wird im Bereich des Förderabschnitts der Skid 14 mittels eines Drehtellers umgesetzt. Hierzu wird der Skid 14 gemeinsam mit dem Drehteller erneut um eine zweite vertikale Drehachse 52 um 180° gedreht bzw. entlang einer Kreisbahn verschoben. Die Drehrichtung des Drehtellers in dem Förderabschnitt 30 ist dabei der Drehrichtung des dritten Förderabschnitts 24 entgegengesetzt. In dem Förderabschnitt 30 wird die Bewegungsrichtung 50 des Skids 14 in die dritte Bewegungsrichtung 54 geändert. Die dritte Bewegungsrichtung 54 ist dabei zu der ersten Bewegungsrichtung 46 parallel und hat die gleiche Richtung.

Aus dem Förderabschnitt 30 gelangt ein Skid 14 über einen weiteren zweiten Förderabschnitt 31 in einen weiteren Förderabschnitt 32. Der Skid wird dort mit der Bewegungsrichtung 54 von der als beschleunigende Abzugseinheit 23 ausgebildeten Skid-Fördereinrichtung in den Förderabschnitt 34 übernommen. Der Skid 14 wird dort erneut beschleunigt und dem letzten Förderabschnitt 36 zugeführt. Der Skid 14 wird hier durch Drehen eines Drehtellers der Skid-Fördereinrichtung 25 um eine Drehachse 56 erneut um 180° aus einer Bewegung mit der dritten Bewegungsrichtung 54 in eine Bewegung mit einer entgegengesetzten vierten Bewegungsrichtung 58 überführt. Aus dem Förderabschnitt 36 gelangt der Skid 14 in den Förderabschnitt 37, der bevorzugt als bremsende Abzugseinheit ausgeführt ist. Von dort wird er in den letzten Förderabschnitt 38 bewegt.

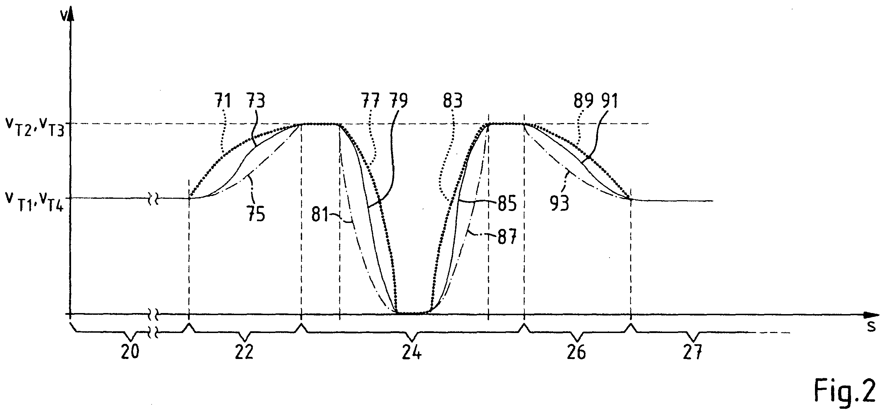

Die Fig. 2 zeigt verschiedene Geschwindigkeitsverläufe für das Bewegen von Kraftfahrzeugkarossen in der Beschichtungsanlage 1. Die Geschwindigkeit der Kraftfahrzeugkarossen ist dort in Abhängigkeit einer Verlagerung s auf der Förderstrecke aufgetragen. In dem Förderabschnitt 20 werden die Kraftfahrzeugkarossen 12 mit einer konstanten Geschwindigkeit v_{T1} bewegt. In dem daran anschließenden Beschleunigungsabschnitt 22 werden die Kraftfahrzeugkarossen 12 dann bevorzugt entsprechend einem der Geschwindigkeitsverläufe 71, 73, 75 mit einer konstanten oder sich ändernden Beschleunigung von der Geschwindigkeit v_{T1} auf die Geschwindigkeit v_{T2} beschleunigt und dem Umsetzabschnitt 24 zugeführt. In diesem ersten Beschleunigungsabschnitt (wie auch in den nachfolgenden Beschleunigungs- und/oder abbremsabschnitten) können insbesondere erfindungsgemäß parabolisch oder hyperbolisch verlaufende Beschleunigungsprofile vorgesehen sein. Im Umsetzabschnitt werden die Kraftfahrzeugkarossen 12 bevorzugt entsprechend der Geschwindigkeitsverläufe 77, 79, 81 abgebremst, um dann nach dem Drehen des Drehtellers nach einem der Geschwindigkeitsverläufe 83, 85, 87 wieder auf eine Geschwindigkeit v_{T3} beschleunigt zu werden. Die dem Abbremsabschnitt 29 übergebenen Kraftfahrzeugkarossen 12 werden dort bevorzugt entsprechend einem der Geschwindigkeitsverläufe 89, 91, 93 mit konstanter oder veränderlicher Beschleunigung abgebremst, um dann in dem Förderabschnitt 27 wieder mit einer konstanten Geschwindigkeit v_{T4} bewegt zu werden.

Die Verwendung von Drehtellern im Bereich der Umsetzabschnitte ermöglicht eine besonders enge Ausführung einer W-förmigen Förderstrecke 16 und damit eine platzsparende Bauform der Beschichtungsanlage 1. Kurvenfahrten von Skids und Produkten werden vermieden. Skids 14 mit den darauf angeordneten Produkten können hier mit einem besonders kurzen Abstand durch die Beschichtungsanlage 1 bewegt werden. Der für das Bewegen von Skids 14 in der Fördervorrichtung 2 zwischen zwei Skids 14 einzuhaltende Mindestabstand wird hier im Wesentlichen durch die Förderkapazität der dritten Förderabschnitte 24, 30 und 36 festgelegt. Dies ist ein vorteilhafter Unterschied zu Fördervorrichtungen mit durchgehend verlaufenden Kettenförderern, in denen die Bewegungsrichtung von Skids mit Kurvenfahrten geändert wird. Der von zwei aufeinanderfolgenden Skids einzuhaltende Mindestabstand hängt hier nämlich von dem Radius der Kurven ab und muss umso größer sein, je kleiner der Kurvenradius ist. Das Beschleunigen und Abbremsen der Skids 14 mit den daran aufgenommenen Kraftfahrzeugkarossen 12 in den Förderabschnitten 22, 24, 26, 28, 30, 31 sowie 34, 36 und 37 gewährleistet dabei, dass die Skids 14 in den Förderabschnitten 20, 27, 32 und 38 kontinuierlich und mit geringem Abstand zueinander transportiert werden können.

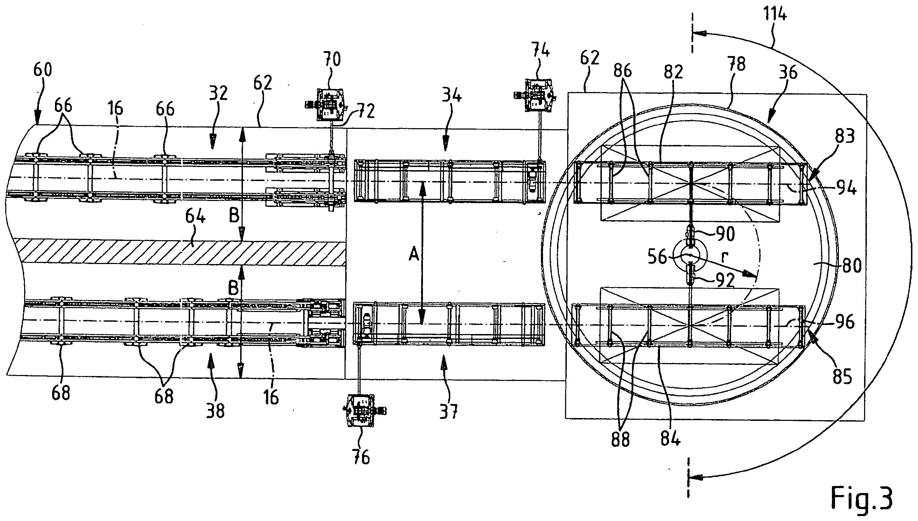

Die vorstehend beschriebenen Förderabschnitte 32 bis 38 werden anhand Fig. 3 näher spezifiziert. Grundlegende Konstruktionsprinzipien können jedoch auch auf die anderen Förderabschnitte 20 bis 31 übertragen werden. Die Fig. 3 zeigt einen Abschnitt der Beschichtungsanlage 1 mit Förderabschnitten 32, 34, 36, 37 und 38. Die Förderabschnitte 32, 34, 36, 37 und 38 sind in einem Trocknertunnel 60 angeordnet. Sie befinden sich in einer Heißgasatmosphäre. Die Temperatur T dieser Heißgasatmosphäre liegt im Regelfall im folgenden Temperaturbereich: 60 °C ≤ T ≤ 250 °C.

Der Trocknertunnel 60 hat eine wärmeisolierende äußere Wandung 62. In dem Trocknertunnel 60 ist der Förderabschnitt 32 von dem Förderabschnitt 38 durch eine (optional auch wärmeisoliert gestaltete) innere Wandung 64 mit Isolationsmaterial getrennt. Die Antriebsrollen 66, 68 in den Förderabschnitten 32, 38 sind jeweils mit einem außerhalb des Trocknertunnels 60 liegenden Antriebssystem gekoppelt. Die Förderrichtung für die Kraftfahrzeugkarossen 12 in den Förderabschnitten 32 und 38 ist einander entgegengesetzt.

Die Fig. 3 zeigt einen Elektromotor 70 für das Antreiben der Antriebsrollen 66 in dem Förderabschnitt 32. Der Elektromotor 70 ist mit einer durch die Wandung 62 des Trocknertunnels 60 ragenden Antriebswelle 72 ausgestattet, die über ein Zahnrad Kräfte auf eine umlaufende Kette überträgt. Diese Maßnahme ermöglicht, dass der Elektromotor 70 nicht für den Betrieb in der Heißgasatmosphäre ausgelegt werden muss.

Die Förderabschnitte 34 und 37 haben ebenfalls Antriebe in Form von Elektromotoren 74, 76, die ebenfalls außerhalb der wärmeisolierten äußeren Wandung 62 des Trocknertunnels befindet.

Der Förderabschnitt 36 enthält eine Drehvorrichtung 78. Die Drehvorrichtung 78 hat einen Drehteller 80, zwei auf dem Drehteller montierte Linearbewegungseinrichtungen 83, 85 samt zugehöriger Antriebseinheiten für den Drehteller und für die Linearbewegungseinrichtungen. Der Drehteller 80 ist um eine ortsfeste vertikale Drehachse 56 drehbar angeordnet, wobei die Linearbewegungseinrichtungen parallel zueinander und jeweils mit einem Abstand zur Drehachse an dem Drehteller positioniert sind. Die Positionierung der Linearbewegungseinrichtungen korrespondiert zu räumlich versetzt angeordneten Verlagerungswegen 94, 96 für die Skids.

Der Drehteiler 80 ist als Heißbereichs-Drehteller ausgebildet: Der Drehteller 80 ist an einer Tragekonstruktion aus Stahl, z. B. Stahl des Typs St 37 o.ä. aufgenommen. Der Drehteller 80 kann insbesondere eine Platte aus einem Edelstahl-Blech aufweisen, die auf eine Struktur aus Baustahl aufgesetzt sein kann. Der Drehteller kann allerdings grundsätzlich auch aus Aluminium oder anderen Metallen hergestellt sein, er ist bevorzugt unterseitig mit wenigstens einer Lage aus wärmeisolierendem, nicht-metallischem Material versehen. Für das Bewegen der Skids 14 mit darauf aufgenommenen Kraftfahrzeugkarossen 12 enthält die Drehvorrichtung 78 zwei Linearbewegungseinrichtungen 83, 85 mit einer Rollenbahn 82 und einer Rollenbahn 84. Die Rollenbahnen 82, 84 sind als Heißbereichsförderer ausgelegt. Sie haben Transportrollen 86, 88, die zumindest abschnittsweise aus temperaturbeständigem Kunststoff und/oder aus einem Metall ausgeführt sind. Die Linearbewegungseinrichtungen 83, 85 umfassen jeweils eine Rollenbahn, ein Getriebe und jeweils einen elektrischen Antrieb 90, 92. Das Getriebe koppelt jeweils die elektrischen Antriebe 90, 92 mit den Transportrollen 86, 88 der Rollenbahnen 82, 84.

Mittels der elektrischen Antriebe 90, 92 kann eine Kraftfahrzeugkarosse 12 mit einem Skid 14 auf der Drehvorrichtung 78 auf einem Kreisbogen 79 mit dem Radius r = A/2 bewegt werden, wobei mit dem Zeichen A der Abstand der Förderstrecke 16 im Förderabschnitt 32 von der Förderstrecke 16 im Förderabschnitt 38 bezeichnet ist (vgl. Fig. 3). Der Radius r kann z. B. etwas weniger als 2,90 m betragen und dabei noch eine Breite B von jeweils mehr als 4,0 m der durch die Wandung 64 getrennten Förderabschnitte 32, 38 in dem Trocknertunnel 60 ermöglichen. Für das Trocknen von PKW-Karossen ist diese Breite B der Förderabschnitte 32, 34 ausreichend. Für einen Radius r ≈ 3,4 m ist es möglich, die Förderabschnitte 32, 34 mit einer Breite B auszuführen, die mehr als 5,0 m beträgt. Mit dieser Bemaßung ist es möglich, in dem Trocknertunnel 60 LKW-Karossen zu trocknen.

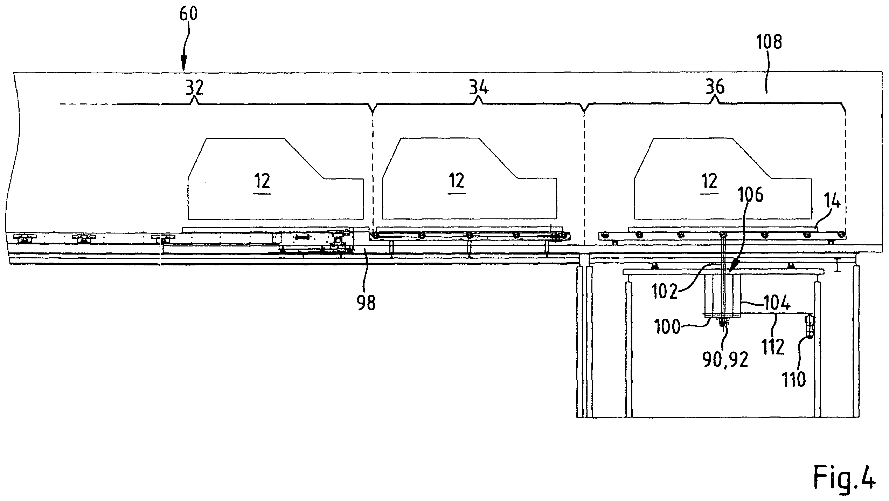

Die Fig. 4 zeigt den Abschnitt der Beschichtungsanlage 1 mit den Förderabschnitten 32, 34 in einer Seitenansicht. Der Trocknertunnel 60 hat (ebenso wie der Drehteller) einen Boden 98, der wärmeisoliert ausgeführt ist. Die elektrischen Antriebe 90, 92 für die Transportrollen der Rollenbahnen 82, 84 sind außerhalb des Trocknertunnels 60 angeordnet. Die Antriebe 90, 92 sind an einer drehbeweglichen Halteeinrichtung 100 aufgenommen. Die Halteeinrichtung 100 ist unterhalb des Bodens 98 des Trocknertunnels 60 positioniert. Das Getriebe für das Koppeln der elektrischen Antriebe 90, 92 mit den Transportrollen 86, 88 der Rollenbahnen 82, 84 enthält als Getriebeelement eine umlaufende Kette 102. Die Kette 102 ist in einem wärmeisolierenden Gehäuse 104 angeordnet, das eine Öffnung 106 hat, die mit dem Inneren 108 des Trocknertunnels 60 kommuniziert.

Um die Transportrollen 86, 88 anzutreiben, können die elektrischen Antriebe 90, 92 alternativ hierzu mit den Transportrollen 86, 88 auch mittels eines Getriebes gekoppelt werden, das anstelle der umlaufenden Kette 102 einen umlaufenden Riemen oder Zahnriemen, ein umlaufendes Stahlseil, eine Kardanwelle oder eine Königswelle enthält.

Für das Bewegen des Drehtellers 80 hat die Drehvorrichtung 78 einen elektrischen Antrieb 110. Der elektrische Antrieb 110 ist durch eine umlaufende Kette 112 mit der Halteeinrichtung 100 drehgekoppelt. Mittels des elektrischen Antriebs 110 wird der Drehteller 80 entsprechend dem in der Fig. 2 gezeigten Doppelpfeil 114 zwischen einer 0°- und 180°-Schwenkposition oszillierend hin- und herbewegt, um die mit der Bewegungsrichtung 54 der aus dem Förderabschnitt 34 zugeführten Skids 14 mit einer Kraftfahrzeugkarosse 12 umzusetzen, um diese dann mit der Bewegungsrichtung 58 weiter zu transportieren.

Durch diese Maßnahme wird ermöglicht, dass die elektrischen Antriebe 90, 92 für die Transportrollen 86, 88 ohne eine aufwändige Drehdurchführung für das Versorgen mit elektrischer Energie betrieben werden können.

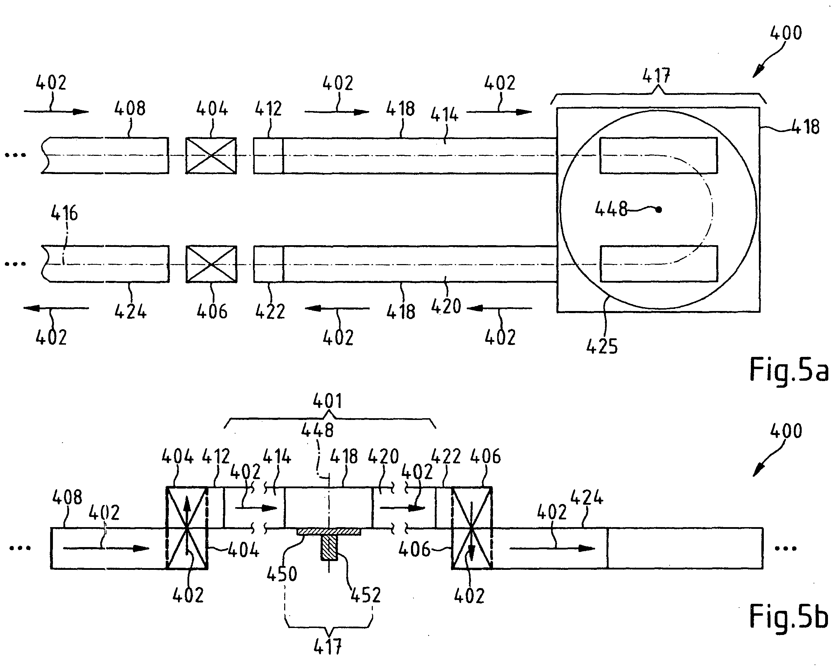

Die Fig. 5a und 5b zeigen eine weitere Anlage 400 für das Trocknen von sperrigen Produkten (z. B.Kraftfahrzeugkarossen) in einem Heißgasatmosphärenbereich mit einer Fördervorrichtung. Mit der Fördervorrichtung können an einem Skid aufgenommene Produkte (nicht dargestellt) auf einer Förderstrecke 416 in der Richtung der Pfeile 402 durch die Anlage 400 bewegt werden. Die Anlage 400 hat einen Trocknungsabschnitt 401 mit einem Trocknertunnel 418, der sich von einem ersten Heißgasbereich 414 zu einem zweiten Heißgasbereich 420 erstreckt. Die Förderstrecke 416 umfasst einen Förderabschnitt 417 mit einer Skid-Fördereinrichtung 425. Der Förderabschnitt 417 ist ein Umsetzabschnitt. Die Skid-Fördereinrichtung 425 befindet sich in dem Trocknertunnel 418. In dem Förderabschnitt 417 werden Skids mit Kraftfahrzeugkarossen auf einem Drehteller 450 um eine Drehachse 448 gedreht. Der Drehteller 450 befindet sich in einem Heißbereich des Trocknertunnels 418. Dort ist die Temperatur gegenüber der Umgebung um 20 °C bis 200 °C erhöht.

Die weitere Anlage 400 enthält zwei Hebezeuge 404, 406. Die Hebezeuge 404, 406 dienen jeweils als Hebe- und Senkmechanismus. Das erste Hebezeug 404 hebt ein in der Fördervorrichtung bewegtes, an einem Skid aufgenommenes Produkt aus einem Einlaufabschnitt 408 kommend etwa 3 m bis 4 m zu einer oberhalb des Einlaufabschnitts 408 angeordneten Abzugseinrichtung 412 an, an die der Heißgasbereich 414 angeschlossen ist. Mit dem Hebezeug 406 wird eine an einem Skid aufgenommene Kraftfahrzeugkarosse aus dem Heißgasbereich 420 kommend von einer sich an den Heißgasbereich 420 anschließenden Abzugseinrichtung 422 zu einem Auslaufbereich 424 bewegt. Weitere Aspekte der genannten Komponenten der weiteren Anlage 400 entsprechen der Ausgestaltung der entsprechenden Komponenten der vorstehend geschilderten Anlagen (Fig. 1 bis Fig. 4), so dass hinsichtlich weiterer Einzelheiten auf die vorstehenden Ausführungen verwiesen wird.

Der Drehteller 450 in dem Förderabschnitt 417 hat einen unterhalb des Bodens des Trocknertunnels 418 angeordneten Antrieb 452. Der Antrieb 452 ist damit außerhalb der Heißgasbereiche 414, 420 und in einem Raum unterhalb eines wärmeisolierten Drehtellers im Bereich des Umsetzabschnitts angeordnet. Somit ist der Antrieb besonders gut gegen (tendentiell aufsteigende) sensible Wärme abgeschirmt.

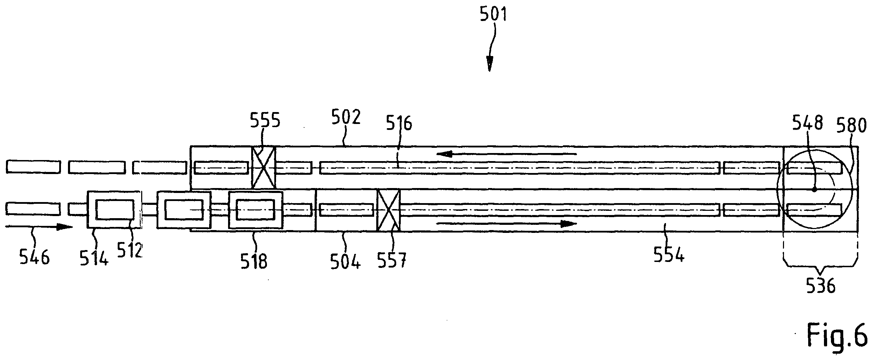

Die Fig. 6 zeigt den Trocknungsabschnitt 502 einer Beschichtungsanlage 501 mit einer als Eingangsschleuse wirkenden Luftschleuse 557, und einer Luftschleuse 555, die eine Ausgangsschleuse ist. Die Luftschleusen 555, 557 enthalten Düsen für das Erzeugen eines Fluidstromvorhangs. Diese Schleusen haben einen Aufbau, der in der Offenlegungsschrift DE 10 2009 021 004 A1 beschrieben ist, insbesondere einen Aufbau, der anhand der Fig. 4 und in den Absätzen [0067], [0068] und [0069] dieser Offenlegungsschrift erläutert ist. Die Luftschleusen können auch den in der am 28.10.2010 beim Deutschen Patent- und Markenamt eingereichten deutschen Patentanmeldung Nr. 10 2010 043 087.0 beschriebenen Aufbau haben. Auf die Beschreibung, die Figuren sowie die Patentansprüche der vorgenannten Patentanmeldung wird deshalb hiermit vollumfänglich Bezug genommen.

Die Beschichtungsanlage 501 umfasst eine Fördervorrichtung mit einer Förderstrecke 516. Mit der Fördervorrichtung werden Skids 514 mit Kraftfahrzeugkarossen 512, die mit der Bewegungsrichtung 546 in einen Eingangsbereich 516 eingeführt werden, auf der Förderstrecke 516 durch die Beschichtungsanlage 501 bewegt. Die Fördervorrichtung enthält einen Förderabschnitt 504. Über den Förderabschnitt 504 werden Skids 514 mit Kraftfahrzeugkarossen durch die Luftschleuse 557 in den Trocknungsabschnitt 554 gefördert. Der Trocknungsabschnitt 554 enthält einen Umsetzabschnitt 536 mit einer Fördereinrichtung, die einen Drehteller 580 enthält. Die Fördereinrichtung mit Drehteller 580 ersetzt die in Trocknertunneln mit Kettenfördervorrichtung herkömmlich ausgebildete Kehrschleife für Skids mit Kraftfahrzeugkarossen 512. In einer Fertigungshalle hat eine solche Kehrschleife im Vergleich zu einem Drehteller einen wesentlich größeren Platzbedarf. Ansonsten gleicht die Ausgestaltung aller wesentlichen Komponenten den vorherigen Ausführungsbeispielen, auf die daher vollumfänglich verwiesen werden kann.

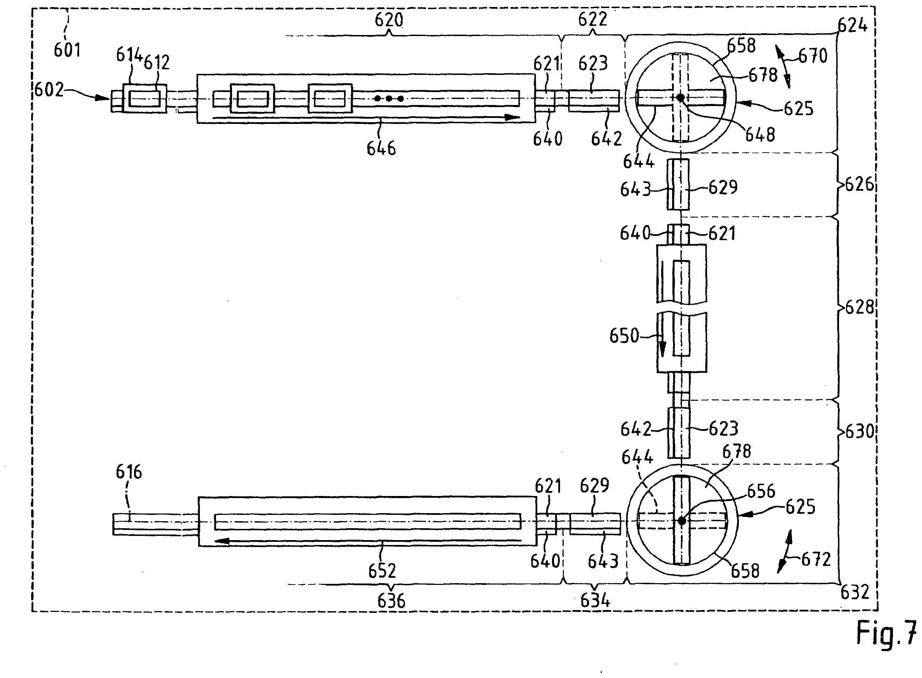

Die Fig. 7 zeigt eine Beschichtungsanlage 601 mit einer mit einer Fördervorrichtung 602 für das Transportieren von Kraftfahrzeugkarossen 612 auf einem Skid 614 entlang einer U-förmig geführten Förderstrecke 616. Die Förderstrecke 616 hat aufeinanderfolgende Förderabschnitte 620, 622, 624, 626, 628, 630, 632, 634 und 636.

Die Förderstrecke 616 enthält Förderabschnitte 620, 628, 636, in denen Skids 614 mit Kraftfahrzeugkarossen 612 mit einer im Wesentlichen konstanten Geschwindigkeit bewegt werden. In den Förderabschnitten 622, 630 werden Skids 614 mit Kraftfahrzeugkarossen 612 von einer Transportgeschwindigkeit v_{T1} auf eine Geschwindigkeit v_{T2} > v_{T1} beschleunigt. In weiteren Förderabschnitten 626, 634 werden Skids 614 mit Kraftfahrzeugkarossen 612 von einer Transportgeschwindigkeit v_{T3} auf eine Geschwindigkeit v_{T4} < v_{T3} abgebremst. Die Förderstrecke 616 enthält außerdem Förderabschnitte 624, 632. Die Förderabschnitte 624, 632 sind Umsetzabschnitte. In den Umsetzabschnitten 624, 632 werden Skids 614 mit Kraftfahrzeugkarossen 612 um die Drehachsen 648, 656 gedreht.

In den Förderabschnitten 620, 622, 624, 626, 628, 630, 632, 634 und 636 gibt es jeweils eine Skid-Fördereinrichtung 621, 623, 625, 629 mit einem Antriebssystem 640, 642, 643, 644.

Der Aufbau der Skid-Fördereinrichtungen 621, 623 und 629 entspricht dem Aufbau der Skid-Fördereinrichtungen 621, 623 und 629 in der Fördervorrichtung 2 aus Fig. 1. Daher kann bezüglich weiterer Einzelheiten auf das erste Ausführungsbeispiel gemäß Fig. 1 vollumfänglich verwiesen werden.

In den als Umlenkabschnitt wirkenden Förderabschnitten 624, 632 enthält die Skid-Fördereinrichtung 625 jeweils eine Drehvorrichtung 658. Mit der Drehvorrichtung 658 kann ein Skid 614 mit einer Kraftfahrzeugkarosse 612 entsprechend den Doppelpfeilen 670, 672 zwischen einer Position für das Aufnehmen von Skids, die in Fig. 6 mit einer durchgezogenen Linie kenntlich gemacht ist, und einer Position für das Aufnehmen von Skids 614, die in der Fig. 6 mit einer gestrichelten Linie kenntlich gemacht ist, um die Drehachsen 648 bzw. 656 um 90° gedreht werden. Dem Umsetzabschnitt 624 werden in der Fördervorrichtung 602 Skids 614 mit Kraftfahrzeugkarossen 612 mit der Bewegungsrichtung 646 zugeführt. Mit der Drehvorrichtung 658 werden die Kraftfahrzeugkarossen 612 in dem Umsetzabschnitt 624 um die Drehachse 648 gedreht und nach dem Drehen mit der Bewegungsrichtung 650 abtransportiert. Entsprechend werden dem Umsetzabschnitt 632 in der Fördervorrichtung 602 die Skids 614 mit Kraftfahrzeugkarossen 612 mit der Bewegungsrichtung 650 zugeführt. Mit der Drehvorrichtung 658 werden die Kraftfahrzeugkarossen 612 in dem Umsetzabschnitt 624 um die Drehachse 656 gedreht und nach dem Drehen mit der Bewegungsrichtung 652 abtransportiert. In der Fördervorrichtung 602 wirkt die Skid-Fördereinrichtung 623 als Zuführeinheit für den Umsetzabschnitt 624, in der Skids 614 mit Kraftfahrzeugkarossen 612 beschleunigt werden. Die Skid-Fördereinrichtung 629 ist eine Übergabeeinheit, der die Skids 614 mit Kraftfahrzeugkarossen 612 aus einem Umsetzabschnitt 625 zugeführt werden.

Die Erfindung betrifft eine Anlage mit einer Fördervorrichtung 2 für das Transportieren von Gegenständen, z. B. Waren oder Werkstücke, insbesondere Kraftfahrzeugkarossen 12. Die Fördervorrichtung 2 hat eine Förderstrecke 16, auf der die Gegenstände 12 unter Änderung der Bewegungsrichtung 46, 50, 54, 58 mit einem ortsfest angeordneten Antriebssystem 40, 42 verlagerbar sind. Die Förderstrecke 16 weist wenigstens einen Umsetzabschnitt 24, 30, 36 auf, dem die Gegenstände 12 mit einer ersten Bewegungsrichtung 48, 52, 56 zugeführt werden, in dem die Gegenstände 12 um eine Drehachse 48, 52, 56 gedreht bzw. verschwenkt werden und aus dem die Gegenstände 12 mit einer von der ersten Bewegungsrichtung 46, 50, 54 verschiedenen zweiten Bewegungsrichtung 50, 54, 58 abtransportiert werden.

## Patentansprüche

1. Anlage (1) für das Behandeln der Oberfläche von Werkstücken, insbesondere für das Trocknen von Werkstücken, z. B. von Kraftfahrzeugkarossen (12),
mit einer Fördervorrichtung (2, 652) für das Transportieren von aufeinanderfolgenden Werkstücken, insbesondere Kraftfahrzeugkarossen (12, 612), mit einer Förderstrecke (16, 616), auf der die Werkstücke (12, 612) mittels eines ortsfesten Antriebssystems (40, 42) bewegt werden können, wobei
die Förderstrecke (16, 616) wenigstens einen Umsetzabschnitt (24, 30, 36, 624, 632) aufweist, dem die Werkstücke (12, 612) mit einer ersten Bewegungsrichtung (48, 52, 56, 646, 650) zugeführt, in dem die Werkstücke um eine Drehachse (48, 52, 56, 648, 656) gedreht und aus dem die Werkstücke (12, 612) mit einer von der ersten Bewegungsrichtung (46, 50, 54, 646, 650) verschiedenen zweiten Bewegungsrichtung (50, 54, 58, 650, 652) abtransportiert werden,
wobei der Umsetzabschnitt (24) einen um die Drehachse (48) drehbare Drehvorrichtung (78) mit einer Linearbewegungseinrichtung (83, 85) für das Einholen von Werkstücken (12) in der ersten Bewegungsrichtung (46, 50, 54) und das Freigeben von Werkstücken (12) in der zweiten Bewegungsrichtung (50, 54, 58) aufweist, und
wobei für das Antreiben der Linearbewegungseinrichtung (83, 85) ein Antrieb (90, 92) vorgesehen ist,
wobei die Förderstrecke (16, 616) einen dem Umsetzabschnitt (24, 30, 36, 624, 632) vorgelagerten Beschleunigungsabschnitt (22, 622) und einen dem Umsetzabschnitt nachgelagerten Abbremsabschnitt (26, 626) enthält, wobei
die Werkstücke (12, 612) in dem Beschleunigungsabschnitt (22, 622) mit einer Zuführeinheit (23, 623) von einer ersten Transportgeschwindigkeit (v_{T1}) auf eine höhere zweite Transportgeschwindigkeit (v_{T2}) beschleunigt werden,
die beschleunigten Werkstücke (12, 612) dem Umsetzabschnitt (24, 30, 36, 624, 632) aus dem Beschleunigungsabschnitt (22, 622) mit der ersten Bewegungsrichtung (48, 52, 56, 646, 650) zugeführt, in dem Umsetzabschnitt (24, 30, 36, 624, 632) um die Drehachse (48, 52, 56, 648, 656) gedreht und mit der von der ersten Bewegungsrichtung (46, 50, 54, 646, 650) verschiedenen zweiten Bewegungsrichtung (50, 54, 58, 650, 652) an den Abbremsabschnitt (26, 626) übergeben werden, und
die an den Abbremsabschnitt (26, 626) übergebenen Werkstücke (12, 612) mit einer Übernahmeeinheit (29, 629) von einer dritten Transportgeschwindigkeit (v_{T3}) auf eine niedrigere vierte Transportgeschwindigkeit (v_{T4}) abgebremst werden,
wobei der Antrieb (90, 92) oberhalb der Drehvorrichtung (78) angeordnet ist oder der sich unterhalb der Drehvorrichtung (78) befindet,
wobei ein Trocknertunnel (60) mit einem Heißgasatmosphärenbereich (108) für das Behandeln der Oberfläche der Werkstücken (12, 612) vorgesehen ist und wobei
die Linearbewegungseinrichtung (83, 85) der Drehvorrichtung (78) in dem Heißgasatmosphärenbereich (108) des Trocknertunnels (60) angeordnet ist und wobei der Antrieb (90, 92) für das Antreiben der Linearbewegungseinrichtung (83, 85) außerhalb des Heißgasatmosphärenbereichs (108) des Trocknertunnels (60) positioniert ist, und
wobei der Antrieb (90, 92) der Linearbewegungseinrichtung (83, 85) mittels eines Getriebes gekoppelt ist, das ein von außerhalb des Heißgasatmosphärenbereichs (108) in den Heißgasatmosphärenbereich (108) ragendes Getriebeelement (102) enthält, das wenigstens in einem sich von außerhalb des Heißgasatmosphärenbereichs (108) in den Heißgasatmosphärenbereich (108) hinein erstreckenden Abschnitt aus einem Material besteht, das eine niedrigere Wärmeleitfähigkeit hat als 10 W/(m°K), insbesondere niedriger als 1 W/(m°K), z. B. aus Keramik oder aus Kunststoff.

2. Anlage nach Anspruch 1, **dadurch gekennzeichnet, dass** die Förderstrecke (16) mit einem dem Beschleunigungsabschnitt (22) vorgelagerten Transportabschnitt (20) ausgebildet ist, in dem die Werkstücke (12) mit einer im Wesentlichen gleichbleibenden Transportgeschwindigkeit (v_{T1}) bewegt werden.

3. Anlage nach Anspruch 1 oder 2, **dadurch gekennzeichnet, dass** die Förderstrecke (16) mit einem dem Abbremsabschnitt (26) nachgelagerten Transportabschnitt (27) ausgebildet ist, in dem die Werkstücke (12) mit einer im Wesentlichen gleichbleibenden Transportgeschwindigkeit (v_{T4}) bewegt werden und/oder dass die Werkstücke (12) in dem Beschleunigungsabschnitt (22) mit einer sich ändernden Beschleunigung beschleunigt werden und/oder die Werkstücke (12) in dem Abbremsabschnitt (29) mit einer sich ändernden Beschleunigung abgebremst werden und/oder dass die erste Transportgeschwindigkeit (v_{T1}) und die vierte Transportgeschwindigkeit (v_{T4}) den gleichen Betrag haben.

4. Anlage nach einem der Ansprüche 1 bis 3, **dadurch gekennzeichnet, dass** die Werkstücke (12) in dem Umsetzabschnitt (24) abgebremst, um die Drehachse (48) gedreht und darauf wieder beschleunigt werden.

5. Anlage nach einem der Ansprüche 1 bis 4, **dadurch gekennzeichnet, dass** die Förderstrecke (16) zueinander parallele Förderabschnitte (20, 27) aufweist, in denen die Werkstücke (12) mit einander entgegengesetzten Bewegungsrichtungen verlagert werden und/oder die Förderstrecke (16) wenigstens einen W-förmig geführten Abschnitt und/oder einen mäanderförmig geführten Abschnitt und/oder wenigstens einen rechteckförmig und/oder in U-Form geführten Abschnitt hat.

6. Anlage nach einem der Ansprüche 1 bis 5, **dadurch gekennzeichnet, dass** die Linearbewegungseinrichtung (83, 85) für das Bewegen der Werkstücke (12) auf der Drehvorrichtung (78) mit einem zu der ortsfesten Drehachse (56) räumlich versetzt angeordneten Verlagerungsweg (94, 96) ausgebildet ist.

7. Anlage nach einem der Ansprüche 1 bis 6, **dadurch gekennzeichnet, dass** die Linearbewegungseinrichtung (83, 85) für das Bewegen der Werkstücke (12) auf der Drehvorrichtung (78) mit zwei parallel zueinander verlaufenden und zu der ortsfesten Drehachse (56) räumlich versetzt angeordneten Verlagerungswegen (94, 96) ausgebildet ist.

8. Anlage nach einem der Ansprüche 1 bis 7, **dadurch gekennzeichnet, dass** die Linearbewegungseinrichtung (83, 85) für das Abbremsen von in der ersten Bewegungsrichtung (46, 50, 54) zugeführten Werkstücken (12) und das Beschleunigen von Werkstücken (12) in der zweiten Bewegungsrichtung (50, 54, 58) ausgelegt ist.

9. Anlage nach einem der Ansprüche 1 bis 8, **dadurch gekennzeichnet, dass** das Getriebe wenigstens teilweise von einem wärmeisolierenden Gehäuse (104) umgeben ist.

## Claims

1. Facility (1) for treating the surface of workpieces, in particular for drying workpieces, for example motor vehicle bodies (12),
having a conveyor device (2, 652) for transporting workpieces arranged in succession, in particular motor vehicle bodies (12, 612), having a conveyor segment (16, 616) on which the workpieces (12, 612) can be moved by means of a fixed drive system (40, 42), wherein
the conveyor segment (16, 616) has at least one transfer section (24, 30, 36, 624, 632), to which the workpieces (12, 612) are supplied with a first direction of movement (48, 52, 56, 646, 650), in which the workpieces are rotated about an axis of rotation (48, 52, 56, 648, 656), and from which the workpieces (12, 612) are removed with a second direction of movement (50, 54, 58, 650, 652) that is different from the first direction of movement (46, 50, 54, 646, 650),
wherein the transfer section (24) has a rotary device (78) that is rotatable about the axis of rotation (48) and has a linear movement arrangement (83, 85) for pulling workpieces (12) in the first direction of movement (46, 50, 54) and releasing workpieces (12) in the second direction of movement (50, 54, 58), and
wherein a drive (90, 92) is provided for driving the linear movement arrangement (83, 85),
wherein the conveyor segment (16, 616) contains an acceleration section (22, 622) arranged upstream of the transfer section (24, 30, 36, 624, 632) and a braking section (26, 626) arranged downstream of the transfer section, wherein
the workpieces (12, 612) in the acceleration section (22, 622) are accelerated by means of a supply unit (23, 623) from a first transport speed (v_{T1}) to a higher second transport speed (v_{T2}),
the accelerated workpieces (12, 612) are supplied with the first direction of movement (48, 52, 56, 646, 650) to the transfer section (24, 30, 36, 624, 632) from the acceleration section (22, 622), are rotated in the transfer section (24, 30, 36, 624, 632) about the axis of rotation (48, 52, 56, 648, 656), and are handed over to the braking section (26, 626) with the second direction of movement (50, 54, 58, 650, 652) that is different from the first direction of movement (46, 50, 54, 646, 650), and
the workpieces (12, 612) handed over to the braking section (26, 626) are braked by means of a handover unit (29, 629) from a third transport speed (v_{T3}) to a lower fourth transport speed (v_{T4}),
wherein the drive (90, 92) is arranged above the rotary device (78) or is located beneath the rotary device (78),
wherein a drier tunnel (60) having a hot-gas atmosphere region (108) is provided for treating the surface of the workpieces (12, 612) and wherein
the linear movement arrangement (83, 85) of the rotary device (78) is arranged in the hot-gas atmosphere region (108) of the drier tunnel (60) and wherein the drive (90, 92) for driving the linear movement arrangement (83, 85) is positioned outside the hot-gas atmosphere region (108) of the drier tunnel (60), and
wherein the drive (90, 92) of the linear movement arrangement (83, 85) is coupled by means of a transmission that contains a transmission element (102) protruding from outside the hot-gas atmosphere region (108) into the hot-gas atmosphere region (108) and consists at least in a section extending from outside the hot-gas atmosphere region (108) into the hot-gas atmosphere region (108) of a material that has a thermal conductivity lower than 10 W/(m°K), in particular lower than 1 W/(m°K), for example made of ceramic or made of plastic.

2. Facility according to Claim 1, **characterized in that** the conveyor segment (16) is formed with a transport section (20) arranged upstream of the acceleration section (22), the workpieces (12) being moved in said transport section at a substantially constant transport speed (v_{T1}).

3. Facility according to Claim 1 or 2, **characterized in that** the conveyor segment (16) is formed with a transport section (27) arranged downstream of the braking section (26), the workpieces (12) being moved in said transport section at a substantially constant transport speed (v_{T4}) and/or **in that** the workpieces (12) are accelerated in the acceleration section (22) with a changing acceleration and/or the workpieces (12) are braked in the braking section (29) with a changing acceleration and/or **in that** the first transport speed (v_{T1}) and the fourth transport speed (v_{T4}) are the same.

4. Facility according to one of Claims 1 to 3, **characterized in that** the workpieces (12) are braked in the transfer section (24), are rotated about the axis of rotation (48), and are then accelerated again.

5. Facility according to one of Claims 1 to 4, **characterized in that** the conveyor segment (16) has conveyor sections (20, 27) running parallel to one another and in which the workpieces (12) are displaced with opposite directions of movement and/or the conveyor segment (16) has at least one section guided in a W-shaped manner and/or one section guided in a meandering manner and/or at least one section guided in a rectangular manner and/or in a U shape.

6. Facility according to one of Claims 1 to 5, **characterized in that** the linear movement arrangement (83, 85) is designed for moving the workpieces (12) on the rotary device (78) with a path of displacement (94, 96) arranged in a manner spatially offset in relation to the fixed axis of rotation (56).

7. Facility according to one of Claims 1 to 6, **characterized in that** the linear movement arrangement (83, 85) is designed for moving the workpieces (12) on the rotary device (78) with two paths of displacement (94, 96) running parallel to one another and arranged in a manner spatially offset in relation to the fixed axis of rotation (56).

8. Facility according to one of Claims 1 to 7, **characterized in that** the linear movement arrangement (83, 85) is designed for braking workpieces (12) supplied in the first direction of movement (46, 50, 54) and for accelerating workpieces (12) in the second direction of movement (50, 54, 58).

9. Facility according to one of Claims 1 to 8, **characterized in that** the transmission is surrounded at least in part by a thermally insulating housing (104).

## Revendications

1. Installation (1) pour le traitement de la surface de pièces, en particulier pour le séchage de pièces, par exemple de carrosseries de véhicules automobiles (12), avec un dispositif de transport (2, 652) pour le transport de pièces successives, en particulier des carrosseries de véhicules automobiles (12, 612), avec une zone de transport (16, 616), sur laquelle les pièces (12, 612) peuvent être déplacées au moyen d'un système d'entraînement stationnaire (40, 42), dans laquelle la zone de transport (16, 616) présente au moins une section d'aiguillage (24, 30, 36, 624, 632), à laquelle les pièces (12, 612) sont envoyées avec une première direction de mouvement (48, 52, 56, 646, 650), dans laquelle les pièces sont tournées autour d'un axe de rotation (48, 52, 56, 648, 656) et hors de laquelle les pièces (12, 612) sont évacuées avec une deuxième direction de mouvement (50, 54, 58, 650, 652) différente de la première direction de mouvement (46, 50, 54, 646, 650),
dans laquelle la section d'aiguillage (24) présente un dispositif rotatif (78) pouvant tourner autour de l'axe de rotation (48) avec un dispositif de mouvement rectiligne (83, 85) pour la capture de pièces (12) dans la première direction de mouvement (46, 50, 54) et la libération de pièces (12) dans la deuxième direction de mouvement (50, 54, 58), et
dans laquelle un entraînement (90, 92) est prévu pour entraîner le dispositif de mouvement rectiligne (83, 85), dans laquelle la zone de transport (16, 616) contient une section d'accélération (22, 622) installée en amont de la section d'aiguillage (24, 30, 36, 624, 632) et une section de freinage (26, 626) installée en aval de la section d'aiguillage, dans laquelle
les pièces (12, 612) sont accélérées dans la section d'accélération (22, 622) avec une unité d'envoi (23, 623) depuis une première vitesse de transport (V_{T1}) jusqu'à une deuxième vitesse de transport plus élevée (V_{T2}),
les pièces accélérées (12, 612) sont envoyées à la section d'aiguillage (24, 30, 36, 624, 632) depuis la section d'accélération (22, 622) avec la première direction de mouvement (48, 52, 56, 646, 650), sont tournées dans la section d'aiguillage (24, 30, 36, 624, 632) autour de l'axe de rotation (48, 52, 56, 648, 656) et sont cédées à la section de freinage (26, 626) avec la deuxième direction de mouvement (50, 54, 58, 650, 652) différente de la première direction de mouvement (46, 50, 54, 646, 650), et
les pièces (12, 612) cédées à la section de freinage (26, 626) sont freinées avec une unité de reprise (29, 629) depuis une troisième vitesse de transport (v_{T3}) jusqu'à une quatrième vitesse de transport plus basse (V_{T4}), dans laquelle l'entraînement (90, 92) est disposé au-dessus du dispositif rotatif (78) ou se trouve en dessous du dispositif rotatif (78),
dans laquelle un tunnel de séchage (60) avec une région avec une atmosphère de gaz chauds (108) est prévu pour le traitement de la surface des pièces (12, 612) et dans laquelle
le dispositif de mouvement rectiligne (83, 85) du dispositif rotatif (78) est disposé dans la région avec une atmosphère de gaz chauds (108) du tunnel de séchage (60) et dans laquelle l'entraînement (90, 92), pour entraîner le dispositif de mouvement rectiligne (83, 85) est positionné à l'extérieur de la région avec une atmosphère de gaz chauds (108) du tunnel de séchage (60), et
dans laquelle l'entraînement (90, 92) du dispositif de mouvement rectiligne (83, 85) est couplé au moyen d'un engrenage, qui contient un élément d'engrenage (102) pénétrant dans la région avec une atmosphère de gaz chauds (108) depuis l'extérieur de la région avec une atmosphère de gaz chauds (108), qui se compose, au moins dans une section s'étendant dans la région avec une atmosphère de gaz chauds (108) depuis l'extérieur de la région avec une atmosphère de gaz chauds (108), d'un matériau qui présente une conductibilité thermique inférieure à 10 W/(m°K), en particulier inférieure à 1 W/(m°K), par exemple en céramique ou en matière plastique.

2. Installation selon la revendication 1, **caractérisée en ce que** la zone de transport (16) est formée avec une section de transport (20) installée en amont de la section d'accélération (22), dans laquelle les pièces (12) sont déplacées avec une vitesse de transport (V_{T1}) essentiellement constante.

3. Installation selon la revendication 1 ou 2, **caractérisée en ce que** la zone de transport (16) est formée avec une section de transport (27) installée en aval de la section de freinage (26), dans laquelle les pièces (12) sont déplacées avec une vitesse de transport (v_{T4}) essentiellement constante et/ou **en ce que** les pièces (12) sont accélérées dans la section d'accélération (22) avec une accélération qui varie et/ou les pièces (12) sont freinées dans la section de freinage (29) avec une accélération qui varie et/ou **en ce que** la première vitesse de transport (V_{T1}) et la quatrième vitesse de transport (v_{T4}) ont la même valeur.

4. Installation selon l'une quelconque des revendications 1 à 3, **caractérisée en ce que** les pièces (12) sont freinées dans la section d'aiguillage (24), tournées autour de l'axe de rotation (48) et ensuite de nouveau accélérées.

5. Installation selon l'une quelconque des revendications 1 à 4, **caractérisée en ce que** la zone de transport (16) présente des sections de transport parallèles l'une à l'autre (20, 27), dans lesquelles les pièces (12) sont déplacées avec des directions de mouvement opposées l'une à l'autre et/ou la zone de transport (16) comporte au moins une section guidée en forme de W et/ou une section guidée sous forme sinueuse et/ou au moins une section guidée sous forme rectangulaire et/ou en forme de U.

6. Installation selon l'une quelconque des revendications 1 à 5, **caractérisée en ce que** le dispositif de mouvement rectiligne (83, 85) est configuré pour le mouvement des pièces (12) sur le dispositif rotatif (78) avec un chemin de déplacement (94, 96) disposé en décalage spatial par rapport à l'axe de rotation stationnaire (56).

7. Installation selon l'une quelconque des revendications 1 à 6, **caractérisée en ce que** le dispositif de mouvement rectiligne (83, 85) est configuré pour le mouvement des pièces (12) sur le dispositif rotatif (78) avec deux chemins de déplacement (94, 96) s'étendant parallèlement l'un à l'autre et disposés en décalage spatial par rapport à l'axe de rotation stationnaire (56).

8. Installation selon l'une quelconque des revendications 1 à 7, **caractérisée en ce que** le dispositif de mouvement rectiligne (83, 85) est conçu pour le freinage de pièces (12) envoyées dans la première direction de déplacement (46, 50, 54) et l'accélération de pièces (12) dans la deuxième direction de mouvement (50, 54, 58).

9. Installation selon l'une quelconque des revendications 1 à 8, **caractérisée en ce que** l'engrenage est entouré au moins en partie par un boîtier thermiquement isolant (104).
